# EUROPÄISCHE PATENTANMELDUNG

(11) **EP 1 283 387 A2**
(43) Veröffentlichungstag der Anmeldung: **12.02.2003**
(21) Anmeldenummer: 02010320.6
(22) Anmeldetag: 07.05.2002
(51) Int. Cl.: F16J 1/12

(54) **Kolbenstangenanordnung**

(30) Priorität: 10.08.2001 DE 10138322
(71) Anmelder: Deutsches Zentrum für Luft- und Raumfahrt e.V., 51147 Köln (DE)
(72) Erfinder: Krenkel, Walter, Dr., 71272 Renningen (DE); Renz, Ralph, 71069 Sindelfingen (DE); Hofmann, Klaus, 58285 Geveisberg (DE); Wirtz, Walter, Dipl.-Ing., 58285 Gevelsberg (DE); Di Fina, Marcello, Dipl.-Ing., 44791 Bochum (DE); Poetch, Günter, Dipl.-Ing., 58332 Schwelm (DE)
(74) Vertreter: Grimm, Ekkehard, Dipl.-Phys.

(57) **Zusammenfassung**

Die Erfindung betriff eine Kolbenstangenanordnung mit einer Kolbenstange (1) und mit mindestens einem Anbindungselement (2) an einem Ende der Kolbenstange (1), wobei die Kolbenstange (1) aus einem faserverstärkten Verbundmaterial aufgebaut ist, die dadurch gekennzeichnet, daß die Kolbenstange ein Grundelement aus einer faserverstärkten Keramik mit einer Grundstruktur aus Kohlenstofffasern und/oder keramischen Fasern, in die zumindest Siliziumkarbid eingelagert ist, mit einer offenen Porosität zumindest in deren Oberflächenschicht von maximal 3% bezogen auf das Volumen dieser Schicht, zum Deponieren von Schmierstoffen in den Poren umfaßt, und daß das mindestens eine Anbindungselement mindestens ein Element aus einem nicht keramischen Werkstoff ist, das an der Kolbenstange kraft- und/oder formschlüssig gehalten ist.

## Beschreibung

Die vorliegende Erfindung betrifft eine Kolbenstangenanordnung mit einer Kolbenstange und mit mindestens einem Anbindungselement an einem Ende der Kolbenstange, wobei die Kolbenstange aus einem faserverstärkten Verbundmaterial aufgebaut ist.

Derartige Kolbenstangen sind bekannt.

Kolbenstangen werden in unterschiedlichen Bereichen eingesetzt, insbesondere auch in Druckzylindern und Stoßdämpfern.

Insbesondere im Bereich der Stoßdämpfer werden an diese Kolbenstangenanordnungen unterschiedliche Anforderungen gestellt; hierzu können geringes Gewicht, hohe Stabilität in den verschiedenen Belastungsrichtungen, die auftreten, und gute Schmiereigenschaften bzw. gute Verschleißbeständigkeit und Korrosionsbeständigkeit aufgezählt werden. Weiterhin müssen solche Kolbenstangenanordnungen zumindest an deren einem Ende angebunden bzw. gehalten werden.

Kolbenstangen, wie sie derzeit eingesetzt werden, insbesondere wie sie auch im Bereich von Stoßdämpferanordnungen eingesetzt werden, bestehen meistens aus einem metallischen Grundkörper, der in der Regel zur Verbesserung der Korrosions- und Verschleißbeständigkeit bzw. der Gleiteigenschaften einer Oberflächenbehandlung unterworfen oder mit einer Beschichtung versehen wird. Zur Verringerung des Gewichts bzw. zur Erhöhung der Korrosionsbeständigkeit werden auch Kolbenstangen aus Aluminiumlegierungen verwendet; es sind aber auch bereits Kolbenstangen aus einem faserverstärkten Polymermaterial bekannt. Diese Materialien verringern ebenfalls das Gesamtgewicht eines Stoßdämpfers bzw. die auftretenden Reaktionskräfte.

Ausgehend von dem vorstehend angegebenen Stand der Technik und den geschilderten Anforderungen an solche Kolbenstangenanordnungen liegt der vorliegenden Erfindung die Aufgabe zugrunde, eine Kolbenstangenanordnung zu schaffen, die zum einen ein geringes Gewicht aufweist, zum anderen die hohen, erforderlichen Festigkeitswerte erzielt, aber auch eine haltbare Anbindung der Kolbenstangenanordnung ermöglicht, und die sich durch gute Schmier- und Gleiteigenschaften bei geringem Verschleiß auszeichnet.

Gelöst wird die vorstehende Aufgabe durch eine Kolbenstangenanordnung mit einer Kolbenstange und mit mindestens einem Anbindungselement an einem Ende der Kolbenstange, wobei die Kolbenstange aus einem faserverstärkten Verbundmaterial aufgebaut ist, die dadurch gekennzeichnet ist, daß die Kolbenstange ein Grundelement aus einer faserverstärkten Keramik mit einer Grundstruktur aus Kohlenstofffasern und/oder keramischen Fasern, in die zumindest Siliziumkarbid eingelagert ist, mit einer offenen Porosität zumindest in deren Oberflächenschicht von maximal 3% bezogen auf das Volumen dieser Schicht, zum Deponieren von Schmierstoffen in den Poren, umfaßt, und daß das mindestens eine Anbindungselement mindestens ein Element aus einem nicht keramischen Werkstoff ist, das an der Kolbenstange kraft- und/oder formschlüssig gehalten ist. Die faserverstärkte Keramik zeichnet sich durch ihr geringes Gewicht einerseits, andererseits durch ihre Verschleißbeständigkeit, aus. Die Grundstruktur aus Kohlenstofffasern und/oder keramischen Fasern kann hierbei so ausgelegt werden, daß die Fasern entsprechend den im Bereich der Kolbenstange auftretenden unterschiedlichen Kraftrichtungen und Kraftkomponenten orientiert werden. Es können Kohlenstofffasern und/oder keramische Fasern eingesetzt werden, wobei die Kohlenstofffasern dann zu bevorzugen sind, wenn hohe Festigkeiten und niedriges Gewicht gefordert sind, während die keramischen Fasern dann eingesetzt werden sollten, wenn eine hohe Verschleißbeständigkeit und geringe Porositäten (< 1 %) erwünscht sind. Ein Faserverbund aus sowohl Kohlenstofffasern als auch keramischen Fasern ist dann zu wählen, wenn hohe Festigkeiten und eine hohe Verschleißbeständigkeit gefordert sind. Durch die Einlagerung der Fasern in eine Siliziumkarbidschicht wird eine mechanisch belastbare Struktur erzeugt und die Verschleißbeständigkeit erhöht. Dieses Siliziumkarbid wird vorzugsweise durch Flüssiginfiltration von flüssigem Silizium in die Faserstruktur eingebracht. Es muß hierbei ausreichend Kohlenstoff zur Verfügung gestellt werden, um durch die Reaktion des flüssigen Siliziums mit Kohlenstoff Siliziumkarbid zu bilden. Dieser Kohlenstoff kann als elementarer Kohlenstoff in die Faserstruktur eingelagert werden; es kann aber auch die Faserstruktur zuvor mit einem Polymer getränkt werden, mit einer anschließenden Pyrolyse, um dabei zum einen ausreichende Hohlräume bzw. Kapillarstrukturen zu erzeugen, zum anderen auch den verwendeten Kohlenstoff bereitzustellen.

Um die erforderlichen Schmier- und Gleiteigenschaften im Bereich der Kolbenstange zu erreichen, wird zumindest in der Oberflächenschicht des Grundelements der Kolbenstange eine Porosität von maximal 3% bezogen auf das Volumen dieser Schicht eingestellt; dieses Porenvolumen kann bevorzugt auch über das gesamte Volumen des Grundelements verteilt sein. Unter Bereitstellung eines Porenvolumens im Bereich der Oberflächenschicht von maximal 3% wird sichergestellt, daß beim Einlagern von Schmieröl oder niedrig viskosen Schmierstoffen in die Poren geringe Reibwerte erzeugt werden. Das Porenvolumen sollte mindestens 0,5 % betragen, damit eine minimale Schmierwirkung durch Deponieren von Schmierstoffen in das Porenvolumen erzielt wird.

Schließlich zeichnet sich die Kolbenstangenanordnung dadurch aus, daß die Anbindung an einem Ende der Kolbenstange über ein entsprechend dimensioniertes Anbindeelement in Form mindestens eines Elements aus einem nicht keramischen Werkstoff, vorzugsweise in Form eines Metall- oder Kunststoffelements, aufgebaut wird, das an der Kolbenstange kraft- und/oder formschlüssig gehalten ist. Damit wird vermieden, daß unmittelbar an dem Grundelement Verbindungen vorgenommen werden; vielmehr wird dieses Anbindungselement als ein Zwischenteil eingesetzt, das dann jeweils entsprechend den Anforderungen zum Anbinden der Kolbenstangen ausgestaltet werden kann, ohne dabei den Aufbau der Kolbenstange selbst verändern zu müssen.

In Bezug auf die vorstehend erwähnte Porosität kann diese gleichmäßig über das gesamte Volumen des Grundelements verteilt werden. Diese Porositätsverteilung sollte dann herangezogen werden, wenn eine hohe Schmierwirkung erforderlich ist und eine vergleichsweise hohe Leckage von beispielsweise Stoßdämpferöl bei Einsatz der Kolbenstangenanordnung in einem Stoßdämpfer toleriert werden kann. Im Gegensatz dazu sollte eine graduelle Zunahme der Porosität von innen nach außen des Grundelements der Kolbenstange dann eingesetzt werden, wenn nur geringe Mengen an Stoßdämpferöl zur Schmierung herangezogen werden bzw. niedrig viskose Fette in der äußeren Schicht eingelagert werden sollen.

Der maximale Volumenanteil der Porosität im Oberflächenbereich soll 3% betragen; vorzugsweise ist dieser Wert auf maximal 1% zu begrenzen, da bei geringerem Porenvolumen die Leckage von beispielsweise Stoßdämpferöl reduziert wird. Gerade dieses geringere Porenvolumen eignet sich besser für Kolbenstangenanordnungen mit hoher Belastungsfrequenz, so daß eine Leckage, auch aufgrund der höheren Kapillarwirkung dieser Poren, vermieden wird.

Der Gehalt des erwähnten Siliziumkarbids des Grundelements liegt bevorzugt im Bereich von 25 - 60 Gewichts-%, wobei ein Bereich von 40 bis 40 Gew.-% noch bevorzugter ist. Mit dem Gehalt des Siliziumkarbids kann die Verschleißbeständigkeit eingestellt werden, wobei bei höheren Siliziumkarbidgehalten eine hohe Verschleißfestigkeit und Steifigkeit erreicht wird, während bei niedrigeren Silziumkarbidgehalten hohe Festigkeiten erzielt werden.

Um an der Kolbenstangenoberfläche eine hohe Verschleißbeständigkeit und trotzdem hohe Festigkeiten zu erreichen, sollte der Keramikgehalt graduell von innen nach außen zunehmen (lastaufnehmender Kernbereich und verschleißfeste Reibfläche) .

Wie bereits erwähnt, kann mit der Orientierung der Fasern die Festigkeit der Kolbenstange in den unterschiedlich auftretenden Kraftrichtungen beeinflußt werden. Grundsätzlich sollten aber vorzugsweise etwa 50% der Fasern der Grundstruktur in Richtung der Achse der Kolbenstange und 50% in Umfangsrichtung der Kolbenstange verlaufen.

Eine weitere bevorzugte Anordnung der Kohlenstofffasern der Grundstruktur ist eine spiralförmige Orientierung der Fasern um die Achse der Kolbenstange herum; bevorzugt verlaufen dann diese spiralförmigen Kohlenstofffasern in einem Winkel zwischen 30 und 60°, und insbesondere unter 45°, zueinander. Mit einer solchen Faserorientierung wird die Bruchdehnung in Richtung der Kolbenstangenachse erhöht.

In einer weiteren vorteilhaften Ausgestaltung kann das Grundelement mindestens im Kernbereich mit einem Polymer verdichtet werden. Als solches Polymermaterial eignen sich ein Polymerharz, wie beispielsweise Phenolharz. Weiterhin können zur Verdichtung auch niedrig viskose Fette in die Poren gepreßt werden. Diese Nachverdichtung verringert eine eventuell herstellungsbedingte hohe offene Porosität, die in einem nicht akzeptablen Bereich, d.h. oberhalb von 3% bezogen auf das Volumen der Oberflächenschicht, liegt, so daß nach dem Nachverdichten, je nach Anwendungsgebiet der Kolbenstangenanordnung, Druckverluste und/oder Öl- bzw. Luftleckagen reduziert oder weitgehend vermieden werden können.

Falls eine hohe Temperaturfestigkeit erforderlich ist, kann das Grundelement zumindest in seinem Kernbereich mit einem Metall oder einer Metalllegierung verdichtet sein. Eine solche Verdichtung wird vorgenommen, indem das Metall oder die Metalllegierung aufgeschmolzen und in das Porenvolumen gepreßt oder infiltriert wird. Eine solche Verdichtung mit einem Metall oder einer Metalllegierung ist auch dann zu wählen, wenn Alterungeffekte den Einsatz eines Polymers ausschließen.

Eine weitere Maßnahme, um hohe Festigkeiten in Kombination mit einer ausreichenden Verschleißbeständigkeit erzielen zu können, ist diejenige, das Grundelement aus Kohlenstofffasern rohrförmig aufzubauen mit einem darin eingesetzten Metallstab. Ein solcher Metallstab hat den Vorteil, von hohen Festigkeiten und Bruchdehnungen im Vergleich zu faserkeramischen Kolbenstangen.

Weiterhin kann das Grundelement aus einem rohrförmigen Kohlenstofffaserkörper mit einem darin eingesetzten Kernstab aus kohlefaserverstärkten Kunststoff aufgebaut werden. Dieser Aufbau führt dazu, daß im Vergleich zum eingesetzten Metallstab das Gewicht deutlich reduziert werden kann.

Eine konstruktiv einfache, allerdings dennoch wirksame Verbindung zwischen der Kolbenstange und dem Anbindungselement, bevorzugt aus Metall oder Kunststoff, ist dann gegeben, wenn das Anbindungselement in Nuten und/oder Vorsprüngen an der Kolbenstange gehalten wird. Bei einem solchen Aufbau wird das Anbindungselement bevorzugt aus mindestens zwei schalenförmigen Teilen aufgebaut, die in mindestens eine Ringnut der Kolbenstange eingreifen. Diese schalenförmigen Teile können von außen auf die Kolbenstange aufgesetzt werden und werden anschließend an der Kolbenstange verriegelt, indem beispielsweise ein Sprengring über die Außenseite der schalenförmigen Teile aufgeschoben wird.

Eine weitere Möglichkeit einer kraft/formschlüssigen Verbindung zwischen Kolbenstange und Anbindungselement ist durch einen bajonettverschlußartigen Aufbau gegeben. Mit einem solchen Aufbau ist es möglich, das Anbindungselement einteilig aufzubauen.

Als Material für das Anbindungselement kann Titan oder eine Titanlegierung oder ein hoch fester Stahl oder eine Stahllegierung eingesetzt werden. Titan oder Titanlegierung bietet den Vorteil einer geringen Dichte und einer guten Korrosionsbeständigkeit, während Stahl oder Stahllegierung dann zu wählen ist, wenn diese preiswertere Alternative akzeptierbar ist.

Ein weiteres Anbindungselement kann an der Kolbenstange in Form eines Gewindes ausgebildet werden. Ein solches Gewinde dient dazu, ein übliches Aufnahmeauge anzubinden oder die Kolbenstange direkt mit dem dazugehörigen Anschlußteil zu verbinden. Dieses Gewinde kann unmittelbar aus dem Grundelement, oder dann, wenn ein Aufbau der Kolbenstange in Form eines Hülsenteils und eines Kernstabs erfolgt, aus dem Kernstab herausgearbeitet werden.

Nachfolgend werden verschiedene Ausführungsbeispiele zur Herstellung von faserkeramischen Kolbenstangen, die in den vorstehend beschriebenen Kolbenstangenanordnungen, wie sie auch noch nachfolgend anhand der Figuren beschrieben werden, eingesetzt werden können, erläutert.

### Ausführungsbeispiel 1

Zunächst wurde ein CFK-Grünkörper in Stangenform aus einem aufgewickelten Phenolharzprepreg hergestellt.

Hierbei wurden Gewebematten mit Faserorientierungen unter 0° und 90°, das bedeutet zum einen parallel zur Achse der Kolbenstange und zum anderen radial um die Achse der Kolbenstange umlaufend, eingesetzt mit HT-Fasern (HT = High Tenacity) mit einer Filamentzahl von 3.000 (geliefert imprägniert von der Firma Akzo, Wuppertal, unter der Bezeichnugn HTA), die mit Phenolharz imprägniert waren. Dieser Grünkörper besaß einen Durchmesser von 15 mm und eine Länge von 150 mm.

Der so vorbereitete CFK-Grünkörper wurde bei 185°C für vier Stunden in einem Temperofen getempert und anschließend bis 1650°C pyrolysiert. Dieser pyrolysierte Vorkörper wurde dann mit flüssigem Silizium bei Temperaturen oberhalb von 1420°C (Schmelzpunkt von Silizium) infiltriert mit einer Haltezeit bei Tₘₐₓ = 1650°C für eine Stunde. Abschließend erfolgte eine mechanische Endbearbeitung des Rohlings auf geforderte Endmaße mit Diamantschleifwerkzeugen.

Diese faserkeramische Kolbenstange besaß die folgenden Eigenschaften:
- SiC-Gehalt von 30 Gewichts-% bezogen auf das Gesamtgewicht der Kolbenstange
- Dichte 1,85 g/cm³
- offene Porosität: 3%, homogen über den Querschnitt der Kolbenstange verteilt
- 50% der Fasern verliefen in Kolbenstangenrichtung, 50% in Umfangsrichtung

### Ausführungsbeispiel 2

Der CFK-Grünkörper in Stangenform wurde aus HTA-Faser-Rovings mit einer Filamentzahl von 3.000 (bezogen von der Firma Akzo, Wuppertal) und einem hoch aromatischen Polymerharz hergestellt. Es erfolgte eine Temperung bei 240°C für 8 Stunden mit anschließender Pyrolyse bis 1650°C. Der so vorbereitete poröse Vorkörper wurde mit flüssigem Silizium bei Temperaturen oberhalb 1420°C (Schmelzpunkt von Silizium) infiltriert und bei einer Haltezeit bei Tₘₐₓ = 1650°C für eine Stunde behandelt. Anschließend erfolgte die mechanische Endbearbeitung auf geforderte Endmaße.

Diese faserkeramische Kolbenstange besaß die folgenden Eigenschaften:
- SiC-Gehalt von 25 Gewichts-% bezogen auf das Gesamtgewicht der Kolbenstange im Gegensatz zu 30% Gewichts-% im Ausführungsbeispiel 1
- offene Porosität: 2%, homogen über den Querschnitt der Kolbenstange verteilt; diese gegenüber Ausführungsbeispiel 1 geringere Porosität erfolgt aufgrund einer höheren C-Ausbeute nach der Pyrolyse des Harzes (Polymerharz) im Vergleich zu Phenolharz
- Dichte: 1,80 g/cm³ (die Fasern verliefen spiralförmig um die Achse der Kolbenstange, wobei die Kohlenstofffasern untereinander einen Winkel von 45° hatten).

### Ausführungsbeispiel 3

Die Herstellung einer weiteren faserkeramischen Kolbenstange erfolgte wie Ausführungsbeispiel 1 oder 2, allerdings wurde nach der Infiltration von Silizium eine Nachverdichtung mit einem hoch aromatischen Polymer zur Reduktion der offenen Porosität (3% bzw. 2%) durchgeführt. Hierzu wurde der mit Silizium infiltrierte, erkaltete Körper im RTM ( Resin Transfer Moulding) Verfahren mit dem genannten Harz nachverdichtet.

Aufgrund dieser Nachverdichtung konnte die offene Porosität auf 0,5%, verglichen mit der Porosität der beiden Ausführungsbeispielen 1 (3%) und 2 (2%), erreicht werden, mit einer homogenen Verteilung dieser offenen Porosität bezogen auf das Gesamtvolumen der Kolbenstange.

Zusammengefaßt zeigen die Ausführungsbeispiele, daß die Porositäten angepaßt werden können bzw. gezielt einstellbar sind mit Porositätswerten von 0,5 bis 3% bezogen auf das Gesamtvolumen. Es sind Kolbenstangen mit geringer Dichte möglich; weiterhin ist eine keramikgerechte Anbindung durchführbar.

Einzelheiten der Erfindung sowie weitere Vorteile werden nun anhand von Ausführungsbeispielen, unter Bezugnahme auf die beigefügten Zeichnungen, beschrieben. In den Zeichnungen zeigt
- Figur 1: eine erste Ausführungsform einer Kolbenstangenanordnung in einem Schnitt entlang der Achse mit Kolbenstange und einem daran angeordneten Anbindungselement,
- Figur 2: eine zweite Ausführungsform einer Kolbenstangenanordnung in einer Schnittdarstellung entlang der Achse,
- Figur 3: eine dritte Ausführungsform einer Kolbenstangenanordnung, vergleichbar mit der Darstellung der Figur 1, allerdings mit einem im Vergleich zu Figur 1 geänderten Anbindungselement,
- Figur 4: eine vierte Ausführungsform einer Kolbenstangenanordnung mit einem Anbindungselement, das in der Kolbenstange in Form eines Zugankers gehalten ist, und
- Figur 5: eine fünfte Ausführungsform einer Kolbenstangenanordnung, vergleichbar mit der zweiten Ausführungsform, die in Figur 2 dargestellt ist, allerdings mit einem geänderten Aufbau im Inneren der Kolbenstange.

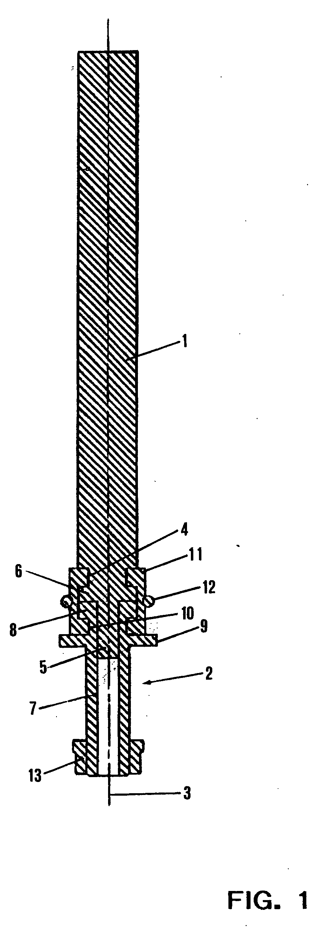

Die Kolbenstangenanordnung gemäß einem ersten Ausführungsbeispiel, wie es in Figur 1 gezeigt ist, umfaßt eine Kolbenstange 1 mit einem an dem einen Ende der Kolbenstange 1 angeordneten Anbindungselement 2. Die Kolbenstange 1 besitzt einen kreisrunden Querschnitt, wobei die Achse der Anordnung mit 3 bezeichnet ist.

Die Kolbenstange 1, wie sie in der Figur 1 und den nachfolgenden Figuren dargestellt ist, kann grundsätzlich entsprechend den Ausführungsbeispielen 1 bis 3, die vorstehend angegeben sind, hergestellt werden, so daß auf den grundsätzlichen materiellen Aufbau und die Herstellung dieser Kolbenstange 1 nachfolgend nicht näher eingegangen wird.

Diese Kolbenstange 1 aus faserverstärkter Keramik ist mit dem Anbindungselement 2 zur Aufnahme eines Dämpferkolbens über eine geteilte Hülse 11 form- und kraftschlüssig verbunden. Hierzu weist die Kolbenstange 1 an deren Anbindungsende eine umlaufende Ringnut 4 und einen stiftförmigen Fortsatz 5 auf mit einem zwischen der Ringnut 4 und dem dornförmigen Fortsatz 5 radial nach außen vorstehenden Flanschteil 6. Das Anbindungselement 2 ist als hülsenförmiger Kolbenzapfen 7 ausgeführt, wobei der Innendurchmesser dieses Hülsenteils dem Außendurchmesser des dornförmigen Fortsatzes 5 entspricht. Das Hülsenteil weist an seinem unteren Ende einen Flansch 8 auf, der in seinen Außenabmessungen dem Flanschteil 6 an der Kolbenstange 1 entspricht. Zwischen diesem Flansch 8 des Hülsenteils 11 und einem weiteren Flanschabschnitt 9 ist somit eine weitere Ringnut 10 vorhanden. In die beiden Ringnuten 4, 10 legen sich nach innen abgewinkelte Ränder einer zweiteiligen Hülse 11 ein, die in der Zeichenebene der Figur 1 in zwei gleiche Teile unterteilt ist. Mit dieser zweiteiligen Hülse 11 wird der Kolbenzapfen 7 an der Kolbenstange 1 verklemmt; zur Sicherung der beiden Teile der zweiteiligen Hülse 11 ist auf die Außenseite ein Sprengring 12 aufgesetzt. Wie weiterhin in Figur 1 zu erkennen ist, ist der Kolbenzapfen 7 mit einem Außengewinde versehen, auf das eine Kolbenmutter 13 aufgeschraubt ist. Die einzelnen Bauteile des Anbindungselements 2, d.h. der Kolbenzapfen 7, die zweiteilige Hülse 11 und die Kolbenmutter 13 sind beispielsweise aus Titan hergestellt, das insbesondere den Vorteil einer geringen Dichte und einer hohen Korrosionsbeständigkeit aufweist.

Mit einem solchen Anbindungselement 2 kann eine kostengünstige und wirksame Anbindung des Dämpferkolbens an die Kolbenstange 1 erfolgen.

Soweit in der vorstehend beschriebenen Figur 1 und in den nachfolgend erläuterten Figuren Bauelemente dargestellt und beschrieben sind, die in ihrem Aufbau und ihrer Funktionsweise miteinander vergleichbar sind, sind dieselben Bezugszeichen verwendet bzw. können die jeweiligen Ausführungen, die zu einer der Figuren angegeben sind, entsprechend auf die andern Ausführungformen übertragen werden.

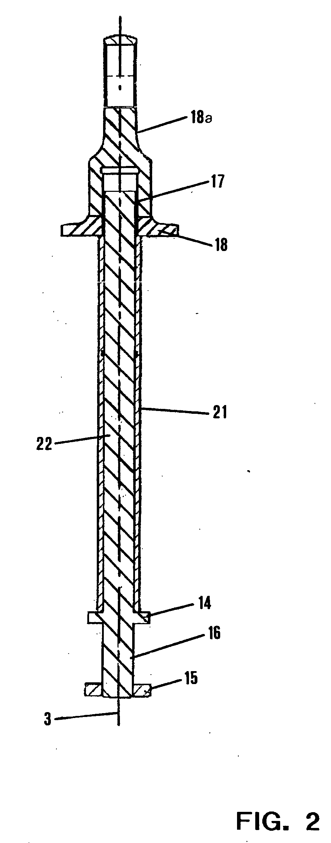

Das zweite Ausführungsbeispiel, wie es in Figur 2 dargestellt ist, ist aus einer Kolbenstange 21 in Rohrform, hergestellt aus einem C/C-SiC-Material (kohlenstofffaserverstärkter SiC-Körper) aufgebaut, in die ein Zuganker 22, eingesetzt ist. Dieser Zuganker 22 besitzt an seinem unteren Ende in Figur 2 ein Flanschteil 14 und eine aufgeschraubte Mutter 15, die unter einem Abstand, eine Ringnut 16 dazwischen belassend, angeordnet sind. In diese Ringnut 16 wird der Dämpferkolben form- und kraftschlüssig befestigt. Das obere Ende des Zugankers 22 in Figur 2 ist mit einem Gewinde 17 versehen, auf das eine Kronenmutter 18 aufgeschraubt ist, die sich an das radiale Ende der hülsenförmigen Kolbenstange 2 anlegt; weiterhin ist ein sich an die Kronenmutter 18 anlegendes Aufnahmeauge 18a aufgeschraubt, mit dem die Kolbenstange 2 an der Radaufhängung eines Fahrzeugs angebunden wird.

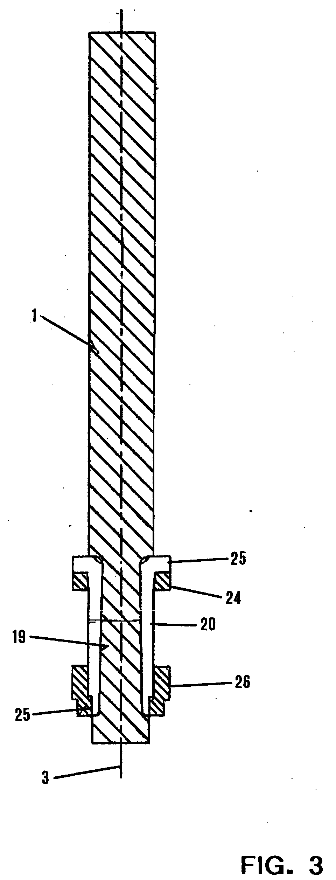

Die dritte Ausführungsform der Figur 3 ist im wesentlichen mit der ersten Ausführungsform in Figur 1 vergleichbar; allerdings ist im Gegensatz zu der Ausführungsform der Figur 1 unmittelbar im Bereich der Anbindung des Dämpferkolbens an die Kolbenstange 1, dieser mit einer Ringnut ausgebildet, in die sich eine in der Zeichnungsebene der Figur 3 gezeigte Befestigungshülse 19 einlegt. In der Schnittdarstellung der Figur 3 ist zu erkennen, daß der Querschnitt der Kolbenstange 1 im Bereich der Ringnut 20 zu dem freien Ende der Kolbenstange 1 hin zunimmt, um eine axiale Lagefixierung für die Befestigungsbuchse bzw. Hülse 19 zu erreichen. Um die zweiteilige Hülse 19 in der Nut 20 zu fixieren, ist im obenliegenden Bereich der Hülse 19, in dem diese Hülse einen nach außen vorstehenden Randabschnitt 23 besitzt, mit einem darauf aufgeschrumpften Ring 24, beispielsweise aus Titan, gegen die Kolbenstange 1 verklemmt; am anderen, in der Figur 3 unteren Ende der Hülse 19 ist die Hülse 19 mit einem Gewinde 25 versehen, auf das eine Kolbenmutter (Überwurfmutter) 26 fixiert ist.

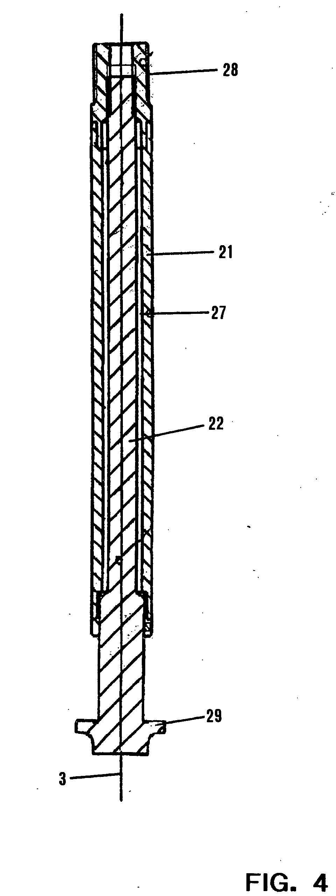

Die vierte Ausführungsform, die in Figur 4 dargestellt ist, verwendet wiederum einen Zuganker 22, eingesetzt in eine hülsenförmige Kolbenstange 21, und ist damit vergleichbar mit der Ausführungsform der Figur 2. Allerdings ist in der Anordnung der Figur 4 der Zuganker 22 in der rohrförmigen Kolbenstange 21 nur im oberen und unteren Bereich anliegend, während in dem mittleren Teil ein Ringspalt 27 belassen ist; dieser Aufbau hat den Vorteil, daß für die rohrförmige Kolbenstange 21, um sie dem Zuganker (und umgekehrt den Zuganker an die rohrförmige Kolbenstange 21) anzupassen, nur ein geringer Bearbeitungsaufwand im Bereich der aneinander anliegenden Enden erforderlich ist. Weiterhin ist in der Anordnung der Figur 4 das obere Ende der Hülse 19 mit einem Außengewinde 28 versehen, um beispielsweise eine Kronenmutter 18 und ein Aufnahmeauge 18a daran aufzuschrauben, wie dies in Figur 2 dargestellt ist. Das untere, von der hülsenförmigen Kolbenstange 1 vorstehende Ende des Zugankers ist mit einem Abschlußflansch 29 versehen, so daß zwischen dem stirnseitigen Ende der hülsenförmigen Kolbenstange 1 und diesem Abschlußflansch 29 eine Ringnut vorhanden ist, in der der Dämpferkolben befestigt werden kann.

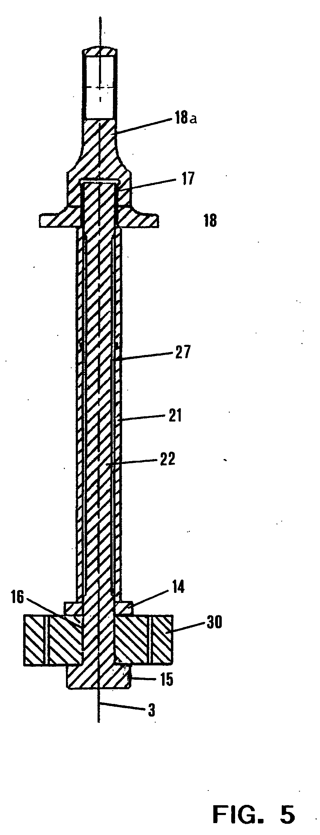

Die fünfte Ausführungsform der Figur 5 ist mit der zweiten Ausführungsform der Figur 2 in ihrem Grundaufbau vergleichbar, allerdings ist bei der fünften Ausführungsform ein Ringspalt 27 belassen, wie er auch in der vierten Ausführungsform der Figur 4 gezeigt und erläutert ist, mit den sich daraus ergebenden Vorteilen. Weiterhin ist in Figur 5 eine Verbindung mit einem schematisch dargestellten Dämperkolben, der mit dem Bezugszeichen 30 bezeichnet ist, gezeigt.

## Patentansprüche

1. Kolbenstangenanordnung mit einer Kolbenstange und mit mindestens einem Anbindungselement an einem Ende der Kolbenstange, wobei die Kolbenstange aus einem faserverstärkten Verbundmaterial aufgebaut ist, **dadurch gekennzeichnet,**
**daß** die Kolbenstange (1; 21) ein Grundelement aus einer faserverstärkten Keramik mit einer Grundstruktur aus Kohlenstofffasern und/oder keramischen Fasern, in die zumindest Siliziumkarbid eingelagert ist, mit einer offenen Porosität zumindest in deren Oberflächenschicht von maximal 3% bezogen auf das Volumen dieser Schicht, zum Deponieren von Schmierstoffen in den Poren umfaßt, und
**daß** das mindestens eine Anbindungselement (2; 18a; 19; 22) mindestens ein Element aus einem nicht keramischen Werkstoff ist, das an der Kolbenstange (1; 21) kraft- und/oder formschlüssig gehalten ist.

2. Kolbenstange nach Anspruch 1, **dadurch gekennzeichnet, daß** die Porosität über das gesamte Volumen des Grundelements verteilt ist und maximal 3% bezogen auf dessen Volumen beträgt.

3. Kolbenstange nach Anspruch 2, **dadurch gekennzeichnet, daß** die Porosität gleichmäßig über das gesamte Volumen des Grundelements verteilt ist.

4. Kolbenstange nach Anspruch 2, **dadurch gekennzeichnet, daß** die Porosität graduell von innen nach außen zunimmt.

5. Kolbenstange nach Anspruch 1 oder 2, **dadurch gekennzeichnet, daß** die Porosität maximal 1% beträgt.

6. Kolbenstange nach einem der Ansprüche 1 bis 5, **dadurch gekennzeichnet, daß** der Gehalt an Siliziumkarbid des Grundelements im Bereich von 25 bis 60 Gewichts-% liegt.

7. Kolbenstange nach Anspruch 6, **dadurch gekennzeichnet, daß** der Keramikgehalt graduell von innen nach außen zunimmt.

8. Kolbenstange nach einem der Ansprüche 1 bis 7, **dadurch gekennzeichnet, daß** das Siliziumkarbid durch Flüssiginfiltration von Silizium in die Grundstruktur aus Kohlenstofffasern und/oder keramischen Fasern unter Bereitstellen von freiem Kohlenstoff gebildet ist.

9. Kolbenstange nach einem der Ansprüche 1 bis 8, **dadurch gekennzeichnet, daß** etwa 50% der Fasern der Grundstruktur in Richtung der Achse orientiert sind und etwa 50% der Fasern in Umfangsrichtung verlaufen.

10. Kolbenstange nach einem der Ansprüche 1 bis 8, **dadurch gekennzeichnet, daß** die Kohlenstofffasern der Grundstruktur spiralförmig um die Achse der Kolbenstange (1; 21) orientiert sind.

11. Kolbenstange nach Anspruch 10, **dadurch gekennzeichnet, daß** die spiralförmig verlaufenden Kohlenstofffasern untereinander Winkel zwischen 30° und 60°, vorzugsweise von 45°, einschließen.

12. Kolbenstange nach einem der Ansprüche 1 bis 11, **dadurch gekennzeichnet, daß** das Grundelement zumindest in seinem Kernbereich mit einem Polymer verdichtet ist.

13. Kolbenstange nach einem der Ansprüche 1 bis 11, **dadurch gekennzeichnet, daß** das Grundelement zumindest in seinem Kernbereich mit einem Metall oder einer Metalllegierung verdichtet ist.

14. Kolbenstange nach Anspruch 1, **dadurch gekennzeichnet, daß** das Grundelement aus Kohlenstorffasern rohrförmig aufgebaut ist mit einem darin eingesetzten Kernstab.

15. Kolbenstange nach Anspruch 14, **dadurch gekennzeichnet, daß** der Kernstab aus einem hochfesten Metall oder einer Metalllegierung gebildet ist.

16. Kolbenstange nach Anspruch 14, **dadurch gekennzeichnet, daß** der Kernstab aus einem kohlenstofffaserverstärkten Kunststoff gebildet ist.

17. Kolbenstange nach einem der Ansprüche 1 bis 16, **dadurch gekennzeichnet, daß** das mindestens eine Anbindungselement (2; 19; 22) in Nuten (4; 20) und/oder an Vorsprüngen (6; 29) an der Kolbenstange gehalten ist.

18. Kolbenstange nach einem der Ansprüche 1 bis 16, **dadurch gekennzeichnet, daß** die Verbindung zwischen Kolbenstange und Anbindungselement einen bajonettverschlußartigen Aufbau aufweist.

19. Kolbenstange nach Anspruch 17, **dadurch gekennzeichnet, daß** das Anbindungselement (14) in mindestens zwei schalenförmige Teile unterteilt ist und das Ende der Kolbenstange mindestens eine Ringnut (20) aufweist, in die sich Bereiche der schalenförmigen Teile einlegen.

20. Kolbenstange nach einem der Ansprüche 1 bis 19, **dadurch gekennzeichnet, daß** das Anbindungselement (2; 18a; 19; 22) aus Titan oder einer Titanlegierung, aus einem hochfesten Stahl oder einer Stahllegierung hergestellt ist.

21. Kolbenstange nach Anspruch 19, **dadurch gekennzeichnet, daß** die zwei schalenförmigen Teile mindestens durch mindestens einen auf deren Außenseite aufgesetzten Ring (24, 26) gehalten sind.

22. Kolbenstange nach einem der Ansprüche 1 bis 21, **dadurch gekennzeichnet, daß** zumindest in die Poren der Oberflächenschicht niedrig viskose Fettstoffe eingelagert sind.

23. Kolbenstange nach einem der Ansprüche 1 bis 21, **dadurch gekennzeichnet, daß** zumindest in die Poren der Oberflächenschicht Stoßdämpferöl eingelagert ist.

24. Kolbenstange nach einem der Ansprüche 1 bis 23, **dadurch gekennzeichnet, daß** an dem anderen Ende der Kolbenstange (21) ein weiteres Anbindungselement in Form eines Gewindes (28) ausgebildet ist.

25. Kolbenstange nach Anspruch 24, **dadurch gekennzeichnet, daß** das Gewinde (28) aus dem Grundelement herausgearbeitet ist.

26. Kolbenstange nach Anspruch 24, **dadurch gekennzeichnet, daß** das Gewinde aus dem Kernstab herausgearbeitet ist.

27. Kolbenstange nach einem der Ansprüche 1 bis 26, **dadurch gekennzeichnet, daß** das Anbindungselement aus Metall oder Kunststoff
